# EUROPEAN PATENT APPLICATION

(11) **EP 1 718 066 A2**
(43) Date of publication of application: **02.11.2006**
(21) Application number: 06112753.6
(22) Date of filing: 19.04.2006
(51) Int. Cl.: H04N 5/33, H04N 5/232

(54) **Thermal imaging device**

(30) Priority: 28.04.2005 US 116444
(71) Applicant: Flir Systems AB, 182 11 Danderyd (SE)
(72) Inventor: Ekeroth, Lucas, SOLNA 170 77 (SE); Lannestedt, Tomas, ÄLVSJÖ 125 42 (SE); Lindström, Kjell, GRÄDDÖ 760 15 (SE)
(74) Representative: Herbjörnsen, Rut

(57) **Abstract**

A thermal camera is characterized in that it comprises an antenna (15) for providing wireless communication and means for storing data received through the wireless communication means in connection with an image recorded by the camera. The camera may also comprise a signal conversion unit (17) for converting commands received through the antenna to a command format recognized by the camera. The antenna is arranged to communicate with a wireless user communication device, such as a headset comprising a microphone and/or a phonespeaker. The camera may further comprise alarm means for determining dangerous situations and to warn an operator through the wireless interface. The thermal camera is particularly suitable for use in dangerous environments.

## Description

### Technical Field

The present invention relates to a thermal imaging device such as a thermal camera and, more particularly, to method of communicating and controlling said camera for use in hazardous environments.

### Background of the Invention

Thermal (or infrared) cameras are used to present thermal images of an object or an area. Since temperature may be indicative of undesired conditions, such as damp, or the malfunction of a machine part, thermal cameras may be used to indicate such conditions.

For example, excess heat in a machine may indicate wear and possible imminent breakdown of a machine part. Excess heat in an electrical circuit may indicate malfunction of a component of the circuit. Similarly, temperatures that consistently show up as lower than normal can be indicative of damp, or of a leakage of water or other liquid.

There is often a desire to monitor areas, or objects, in places that are unsuitable or unsafe for human beings because of extreme environmental conditions due to excessively high or low temperatures, the presence of poisonous substances or high voltages, for example. It is desirable to be able to provide continuous monitoring without subjecting humans to these and other conditions.

### Summary of the Invention

It is an object of the present invention to enable the monitoring of conditions in environments that are unsuitable and dangerous to human beings.

This object is achieved according to the invention by using a thermal imaging camera comprising optics for focusing incoming infrared radiation onto an imaging device, processing means for processing the data detected by the imaging device to obtain an image, and at least one processor for controlling the camera, said camera comprising an antenna for providing wireless communication and means for storing information received through the antenna in connection with at least one image recorded by the camera.

In addition to, or instead of, the storage means, the camera may comprise a signal conversion unit for converting commands received through the antenna to a command format recognized by the camera.

The antenna is preferably arranged to communicate with a wireless user communication device, such as a headset comprising a microphone and/or a phonespeaker. The wireless user communication device may also comprise at least one key or similar means for manually entering a command.

The signal conversion unit is connected between the antenna and the processor or between the imaging device and the processing means. In the latter case better synchronization is achieved between the image recorded through the focal plane array and the comments recorded through the signal conversion unit. It also reduces the power consumption since the image processing can be controlled directly.

The thermal camera according to the invention preferably comprises alarm means for determining hazardous situations and to warn an operator through the wireless interface.

The alarm means preferably comprises storage means for receiving and storing at least one threshold value, comparing means for comparing the values registered by the camera to the at least one threshold value and notifying means for notifying the operator through the wireless interface if a registered value exceeds the at least one threshold value. The alarm function can also be implemented using pattern recognition, by enabling the camera to recognize anomalies having a certain shape. This may be useful, for example, when testing printed board assemblies. It may also be feasible to enable the camera to diagnose itself and to issue an alarm if the state of the camera is not good.

Preferably, the antenna and signal conversion unit are adapted for use with short-range radio communication such as Bluetooth, but any wireless communication standard can be used, including IR communication and cellular telephony such as GSM or GPRS.

Thus, the camera according to the invention enables a wireless connection between the camera itself and an earphone used by the operator. This eliminates the security risk that a cable can pose and also enables operation of the camera from greater distances compared to using a cable connection. The operation includes controlling the function of the camera as well as recording comments.

With the camera according to the invention, the crosstalk that is often caused from working near high voltages and disturbances in the cable affecting the communication are eliminated.

The camera according to an embodiment of the invention can also be placed in environments that are dangerous to human beings and communicate information on a wireless connection either to a computer system capable of storing and processing the data received from the camera, or to an operator located away from the dangerous environment.

For example, the camera could be used to detect hot spots, trigger an alarm and send a warning wirelessly in the case of an excessively high operating temperature, a damaged component, a water leakage etc.

Even though the camera according to the invention is particularly well suited for work in hazardous environments the use of the invention is of course advantageous for any type of environment since it enables very flexible positioning of the camera and relatively simple communication between the user and the camera.

### Brief Description of the Drawings

The present invention will be described in more detail in the following, with reference to the appended drawings, in which:
Figure 1 illustrates a thermal camera according to a first embodiment of the invention, and
Figure 2 illustrates a thermal camera according to a second embodiment of the invention.

### Detailed Description of Embodiments

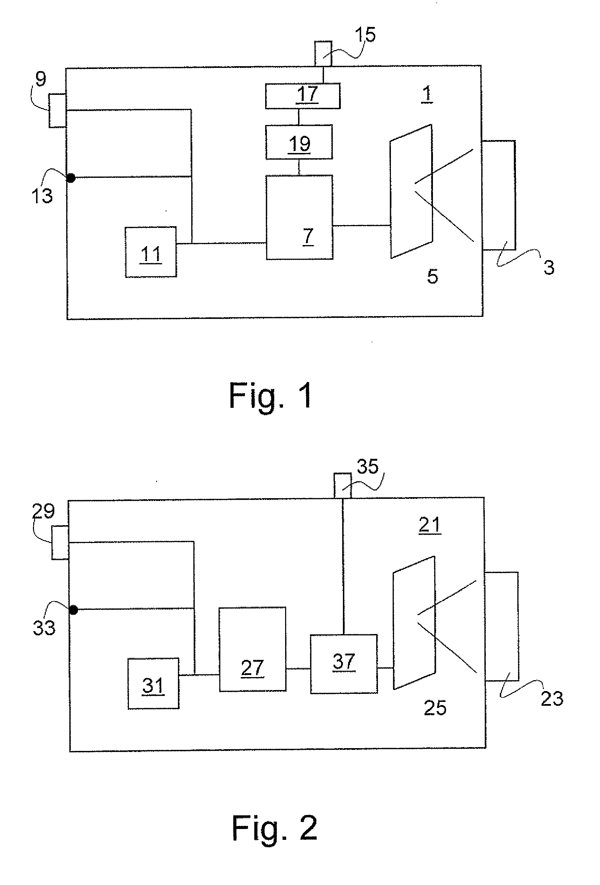

Figure 1 shows a thermal camera 1 according to a first embodiment of the invention. As is common in the art for thermal cameras the camera according to the invention comprises optics 3 for focusing incoming infrared radiation onto a focal plane array 5. From the focal plane array 5 the information is forwarded to a processing means 7 that processes the image and presents it in a viewer 9 and/or stores it in a storage means 11 and/or transmits it through an output 13 to an external device such as a computer. All of these options, as well as the signal processing, are well known to the person skilled in the art.

The camera 1 also comprises an antenna 15 for communicating on a wireless connection, and a signal conversion unit 17 connected to the antenna 15. The signal conversion unit 17 may be implemented as an application specific integrated circuit (ASIC). It may also be implemented as a software module in a processor. In this embodiment the signal conversion unit 17 is placed between the antenna 15 and a processor 19, which is in turn connected to the processing means 7.

The main function of the signal conversion unit 17 is to enable wireless communication. According to a preferred embodiment of the invention the wireless connection is used for controlling the function of the camera by means of voice commands. In this case the signal conversion unit 17 is arranged to recognize a number of predefined voice command words and translate each of them to an appropriate action to be performed by the camera. Preferably, each command word is translated to a signal already used by the camera to perform the associated action. In this way, the functions themselves do not have to be implemented again. Instead, functions already present in the camera can be controlled via the signal conversion unit 17. The action may be performed by the processing means 7 or by the separate processor 19.

Examples of actions that may be relevant in the context of the invention include the following:
- storing an image,
- changing the coloring scheme or another aspect of the image forming process,
- recording a comment through the wireless interface and storing it with the image. It should be noted that the procedure for recording a comment and storing it together with the image is disclosed in PCT patent application numbers PCT/SE03/00528 and PCT/SE02/00857
- showing an image and/or playing back a comment to the operator
- setting a threshold level for detecting temperatures that are below or above the threshold level in order to detect abnormalities.

Figure 2 discloses a second embodiment of the invention. As in Figure 1 a thermal camera 21 comprises optics 23 for focusing incoming infrared radiation onto a focal plane array 25. From the focal plane array 25 the information is forwarded to a processing means 27 that processes the image and presents it in a viewer 29 and/or stores it in a storage means 31 and/or transmits it through an output 33 to an external device such as a computer.

The camera 21 also comprises an antenna 35 for communicating on a wireless connection, and a signal conversion unit 37 connected to the antenna 35. The signal conversion unit 37 may be implemented as an application specific integrated circuit (ASIC). It may also be implemented in software as a software module in a processor.

In this embodiment the signal conversion unit 37 is connected between the focal plane array 25 and the processing means 27. This enables better synchronization between the image recorded through the focal plane array 25 and the comments recorded through the signal conversion unit 37. It also reduces the power consumption since the image processing can be controlled directly.

In each of the embodiments above the signal conversion unit may be able to understand commands for navigating in a menu system (e.g. "right", "left", "up", "down", "select") or to understand the actual commands (such as "comment", "take image", "set threshold", etc.)

In yet another embodiment, the camera comprises means for determining hazardous situations and to warn an operator through the wireless interface. According to this embodiment, the camera comprises means for receiving and storing at least one threshold value and means for comparing the values registered by the camera to the at least one threshold value and, if a registered value exceeds the at least one threshold value, notify the operator through the wireless interface. The storage means may be the storage means 11, 31 used to store images, or another storage means. These functions are preferably implemented in one or more of the processors 7, 19, 27 and/or the signal conversion unit 17, 37. This enables the unit to detect of excessive temperatures, for example caused by friction to a particular component, or abnormally low temperatures, for example caused by damp conditions or from leakage of water or other liquids.

The wireless connection between the camera and the operator may also be used to communicate instructions from the camera to the operator, for example,when a routine check is being performed, for verifying the settings in which to apply to the camera for specific situations, the type of comment to be entered at any given time, etc. In this way, information can be conveyed efficiently to the operator without blocking part of the image.

The wireless connection used in the invention may be any type of wireless connection. For communication over short distances, for example, a short range radio communication such as Bluetooth® may be used. Alternatively, a radio frequency telephony communication unit, for example GSM, GPRS, CDMA, or WiMax technologies may be included in the camera.

## Claims

1. A thermal camera comprising optics for focusing incoming infrared radiation onto an imaging device, processing means for processing the data detected by the imaging device to obtain an image, and at least one processor for controlling the camera, said camera comprising:
an antenna for providing wireless communication for controlling said camera; and
means for storing information received through the antenna in connection with at least one image recorded by the camera.

2. A thermal camera according to claim 1, further comprising a signal conversion unit for converting commands received through the antenna to a command format recognized by the camera.

3. A thermal camera according to claim 1, wherein the antenna is arranged to communicate with a wireless user communication device, such as a headset comprising a microphone and/or a phonespeaker.

4. A thermal camera according to claim 1, wherein the antenna is arranged to communicate with a wireless user communication device comprising at least one key for manually entering a command.

5. A thermal camera according to claim 1, wherein the signal conversion unit is connected between the antenna and the processor.

6. A thermal camera according to claim 1, wherein the signal conversion unit is connected between the imaging device and the processing means.

7. A thermal camera according to claim 1, further comprising alarm means for determining dangerous situations and to warn an operator through the wireless interface.

8. A thermal camera according to claim 1, wherein the alarm means comprises storage means for receiving and storing at least one threshold value, comparing means for comparing the values registered by the camera to the at least one threshold value and notifying means for notifying the operator through the wireless interface if a registered value exceeds the at least one threshold value.

9. A thermal camera according to claim 1, wherein the antenna and signal conversion unit are adapted to short-range radio communication such as Bluetooth.

10. A thermal camera comprising optics for focusing incoming infrared radiation onto an imaging device, processing means for processing the data detected by the imaging device to obtain an image, and at least one processor for controlling the camera, said camera comprising:
an antenna for providing wireless communication, and
alarm means for determining dangerous situations and to warn an operator through the wireless interface.

11. A thermal camera according to claim 10, further comprising a signal conversion unit for converting commands received through the antenna to a command format recognized by the camera.

12. A thermal camera according to claim 10, wherein the antenna is arranged to communicate with a wireless user communication device, such as a headset comprising a microphone and/or a phonespeaker.

13. A thermal camera according to claim 10, wherein the antenna is arranged to communicate with a wireless user communication device comprising at least one key for manually entering a command.

14. A thermal camera according to claim 10, wherein the signal conversion unit is connected between the antenna and the processor.

15. A thermal camera according to claim 10, wherein the signal conversion unit is connected between the imaging device and the processing means.

16. A thermal camera according to claim 10, further comprising control means for controlling said camera; and
means for storing information received through the antenna in connection with at least one image recorded by the camera.

17. A thermal camera according to claim 10, wherein the alarm means comprises storage means for receiving and storing at least one threshold value, comparing means for comparing the values registered by the camera to the at least one threshold value and notifying means for notifying the operator through the wireless interface if a registered value exceeds the at least one threshold value.

18. A thermal camera according to claim 10, wherein the antenna and signal conversion unit are adapted to short-range radio communication such as Bluetooth.
